# EUROPEAN PATENT APPLICATION

(11) **EP 3 121 498 A1**
(43) Date of publication of application: **25.01.2017**
(21) Application number: 15764722.3
(22) Date of filing: 11.03.2015
(51) Int. Cl.: F16L 9/02, B21D 51/18, B21D 53/06, B23K 9/23, F28F 1/12, F28F 21/08

(54) **WELDED TITANIUM PIPE AND WELDED TITANIUM PIPE MANUFACTURING METHOD**

(30) Priority: 18.03.2014 JP 2014054923
(71) Applicant: Kabushiki Kaisha Kobe Seiko Sho (Kobe Steel, Ltd.), Kobe-shi, Hyogo 651-8585 (JP)
(72) Inventor: TAMURA, Keitaro, Hyogo 676-8670 (JP); FUJII, Yasuyuki, Kobe-shi, Hyogo 651-2271 (JP); ITSUMI, Yoshio, Hyogo 676-8670 (JP); OYAMA, Hideto, Hyogo 676-8670 (JP)
(74) Representative: Müller-Boré & Partner Patentanwälte PartG mbB
(86) International application number: PCT/JP2015/057088
(87) International publication number: WO 2015/141532

(57) **Abstract**

Provided are a welded titanium tube (1) capable of improving heat-transfer performance and detecting surface defects and a manufacturing method therefor. The welded titanium tube (1) is formed of a tubular-shaped titanium plate, whose edges are butt-welded. The welded titanium tube (1) includes an outer peripheral surface and an inner peripheral surface, at least one of which is provided with a concavo-convex pattern including a base surface (3) and a plurality of protrusions (2). A mean maximum height of the protrusions (2) is in the range of 12 to 45 µm. A ratio of a maximum value to a mean pitch of the protrusions (2) is less than 2. A ratio of a mean maximum dimension of the protrusions (2) to the mean pitch is 0.90 or less, and a ratio of the mean maximum height to a wall thickness is 0.11 or less.

## Description

### Technical Field

The present invention relates to a welded titanium tube for use in a heat transfer tube of a heat exchanger, and a manufacturing method for the welded titanium tube.

### Background Art

Generally, a seawater desalination apparatus or an LNG (Liquefied Natural Gas) vaporizer employs a heat exchanger including a heat transfer tube. The heat transfer tube is composed, for example, of a welded tube provided with concavities-convexities such as protrusions or grooves, in an outer or inner surface thereof. The welded tube, which is obtained by fabricating, into a tubular shape, a metal flat plate having convexities, such as protrusions, formed in a surface thereof and welding edges of the bent plate together, is configured to permit a fluid to pass therethrough to promote heat exchange between the fluid and a substance outside the welded tube.

On the other hand, to realize higher performance and downsizing in a seawater desalination apparatus or an LNG (Liquefied Natural Gas) vaporizer, required is to improve heat-transfer performance, namely, heat exchange efficiency, of a heat exchanger to be installed in the desalination apparatus or the vaporizer. With a view to the improvement, there have so far been proposed various heat transfer tubes as disclosed in the following Patent Literatures 1 to 3.

The Patent Literature 1 discloses a nucleate boiling heat transfer tube. This heat transfer tube has an outer surface formed with a cavity, which has a spiral shape with a given axial pitch of the tube and changes in terms of cross-section. The cavity has a continuous or discontinuous, irregular-shaped narrow opening which has a width of 0.13 mm or less, the opening making communication with an outside along its longitudinal direction, the opening being arranged at a given circumferential pitch of the tube to join respective parts of the opening, the part being axially adjacent of the tube. The cavity is provided with an irregular-shaped narrow opening with a width of 0.13 mm or less and makes communication with an outside along its longitudinal direction.

The Patent Literature 2 discloses a heat transfer tube for boiling. The heat transfer tube includes a tube body, a cavity which is provided under an outer peripheral surface of the tube body and extends orthogonally or obliquely with an axial direction of the tube, a plurality of openings provided along the cavity to provide communication between an internal space and an outside of the cavity, and a fin protruding outwardly from the tube body. Each of the openings has an opening area of 0.15 to 0.25 mm², and the fin has a height dimension of 0.30 to 0.50 mm.

The Patent Literature 3 discloses a heat transfer tube for a boiling tube. This transfer tube includes a tube body allowing a heating medium to flow therein, a plurality of first fins provided on an outer peripheral surface of the tube body, and a plurality of second fins provided apart from respective first fins at certain intervals. The plurality of second fins is combined with the first fins to define respective cavities each having an inlet port for introducing a cooling medium therethrough. The second fins are formed with a plurality of discharge ports, through which gas bubbles generated by boiling of the cooling medium flowing into the cavity by the heating medium are discharged to an outside.

However, the aforementioned conventional techniques involve the following technical problems.

In each of the heat transfer tubes disclosed in the Patent Literatures 1 to 3, complicated concavities-convexities such as protrusions or grooves are formed on/in an outer surface of the heat transfer tube so as to improve the heat-transfer performance. To facilitate these complicated concavities-convexities, there is selected a metal material having good rolling workability, such as copper or aluminum, as a material for forming a heat transfer tube. On the other hand, it is desirable to select a heat transfer tube made of titanium having excellent seawater resistance (corrosion resistance in seawater) in the case of flowing seawater or the like in the heat transfer tube. However, a titanium heat transfer tube, which has a large elastic strength and therefore involves difficulty in effectively performing rolling, is hard to effectively perform concavo-convex forming. Even if it became possible to form the complicated concavities-convexities such as protrusions or grooves in the outer surface of the titanium heat transfer tube, it involves a significant increase in production cost of the heat transfer tube because of the need for a relatively thick flat plate to manufacture the heat transfer tube. Hence, even when a titanium heat transfer tube is manufactured through the techniques disclosed in the Patent Literatures 1 to 3, the manufactured tube is hard to use as a final product.

Secondly, there is a technical problem about detection of surface defects. Outer and inner surfaces of a heat transfer tube having been subjected to the above concavo-convex forming includes remaining microscopic flaws generated during production of the heat transfer tube. The microscopic flaws thus remaining in the outer and inner surfaces of the heat transfer tube can cause fatal damage such as fatigue breaking of the heat transfer tube when the tube is used as a heat exchanger. For this reason, it is desirable to perform detection of defects such as flaws remaining in outer and inner surfaces of the manufactured heat transfer tube by use of a non-destructive inspection apparatus. Examples of the non-destructive inspection apparatus include an eddy current flaw detection apparatus.

However, the outer or inner surface of the heat transfer tube is formed with protrusions or grooves, as above described, which are capable of hindering detection of defects (flaws) remaining in the surfaces of the heat transfer tube. For example, a deep groove pattern (concavities-convexities) or the like provided in the surface of the heat transfer tube is likely to be detected as noise in an operation of detecting defects remaining in the surfaces by use of an eddy current flaw detection apparatus, generating a possibility that some defects remaining in the surfaces of the tube are hidden behind the noise to fail to be detected.

### Citation List

### Patent Literature

Patent Literature 1: JPS 64-2878B
Patent Literature 2: JPH 06-323778A
Patent Literature 3: JP 2005-121238A

### Summary of Invention

It is an object of the present invention to provide a welded tube having high heat-transfer performance and capable of allowing surface defects remaining in a surface thereof to be detected more accurately, and a method for manufacturing the welded titanium tube.

Provided is a welded titanium tube, which is formed of a titanium plate in a tubular shape wherein opposite edges of the plate is butt-welded. The welded titanium tube includes an outer peripheral surface and an inner peripheral surface, at least one of the outer peripheral surface and the inner peripheral surface being provided with a concavo-convex pattern. The concavo-convex pattern has a base surface and a plurality of protrusions each protruding beyond the base surface radially of the welded titanium tube, the plurality of protrusions being spaced in at least one of an axial direction and a circumferential direction of the welded titanium tube. A mean value Ha of respective maximum heights of the protrusions is set so as to satisfy the following relationship: 12 µm ≤ Ha ≤ 45 µm. The "maximum height" is a maximum dimension of the protrusion in a protruding direction with reference to a lowest spot of the base surface around the protrusion.

In the welded titanium tube, a ratio of a maximum value Pmax of a pitch of the protrusions in a specific arrangement direction to a mean value Pa of the pitch of the protrusions is set so as to satisfy the following relationship: Pmax/Pa < 2, wherein the specific arrangement direction is one direction of the axial and circumferential directions of the welded titanium tube, the one direction being a direction in which the plurality of protrusions are spaced at a smaller pitch than a pitch at which the plurality of protrusions are spaced in the other direction of the axial and circumferential directions of the welded titanium tube. When the plurality of protrusions are spaced only in one direction of the axial direction and the circumstantial direction, the one direction corresponds to the specific arrangement direction.

Furthermore, a ratio of a mean value da of respective dimensions of the protrusions in the specific arrangement direction to the mean value Pa of the pitch is set so as to satisfy the following relationship: da/Pa ≤ 0.90, and a ratio of the mean value Ha of the respective maximum heights of the protrusions to a wall thickness t of the welded titanium tube at a lowest spot of the base surface is set so as to satisfy the following relationship: Ha/t ≤ 0.11.

Also provided is a method for manufacturing the above welded titanium tube. The method includes: a concavo-convex pattern provision step of providing at least one of a front surface and a back surface of a titanium plate having a longitudinal direction and a width direction orthogonal to the longitudinal direction with the concavo-convex pattern, so as to space the plurality of protrusions in at least one of the longitudinal and width directions; a formation step of forming the titanium plate into a tubular shape by applying a curvature along the width direction to the titanium plate provided with the concavo-convex pattern to butt opposite edges thereof in the width direction against each other; and a welding step of joining the widthwise opposite and mutually butted edges of the tubular-shaped titanium plate together by welding.

### Brief Description of Drawings

FIG. 1 is a diagram schematically depicting a welded titanium tube according to one embodiment of the present invention.
FIG. 2 is an enlarged diagram of the portion II in FIG. 1.
FIG. 3 is an enlarged sectional view of a concavo-convex pattern provided on a surface of a titanium plate to be formed as a welded titanium tube (an enlarged diagram of a cross-section of the portion II in FIG. 1).
FIG. 4 is a diagram depicting a welded titanium tube as a subject of an eddy current flaw detection test.
FIG. 5 is a diagram depicting inspection data obtained by subjecting a welded titanium tube in Inventive Example to the eddy current flaw detection test.
FIG. 6 is a diagram depicting inspection data obtained by subjecting a welded titanium tube in Comparative Example to the eddy current flaw detection test.

### Description of Embodiments

Based on the drawings, a welded titanium tube according to one embodiment of the present invention and a production method for the welded titanium tube will now be described in detail.

It should be understood that the following embodiment is a specific example of the present invention, and the essential feature of the present invention is never restricted by the specific example. Therefore, the technical scope of the present invention is not limited to only the disclosure of the embodiment.

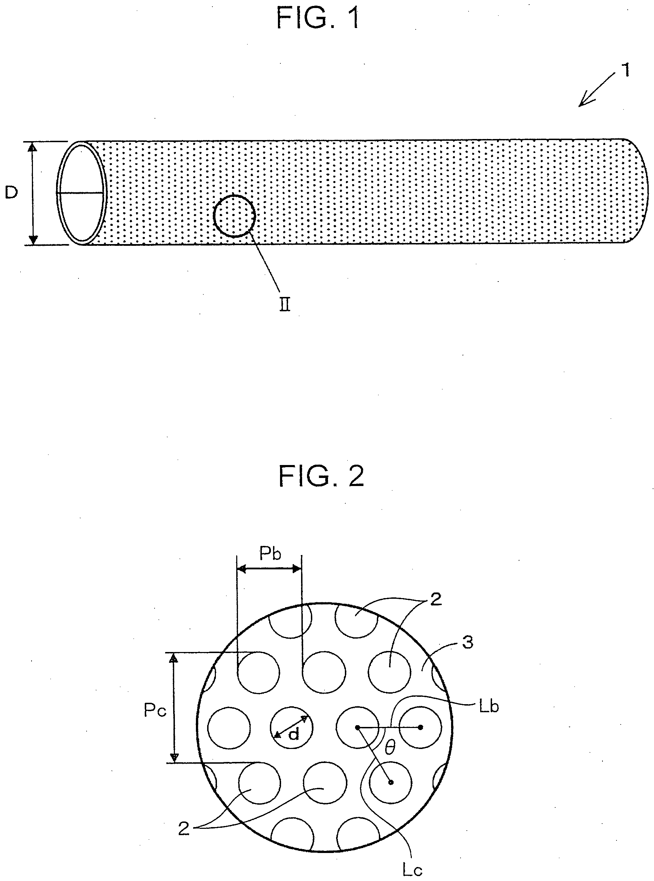

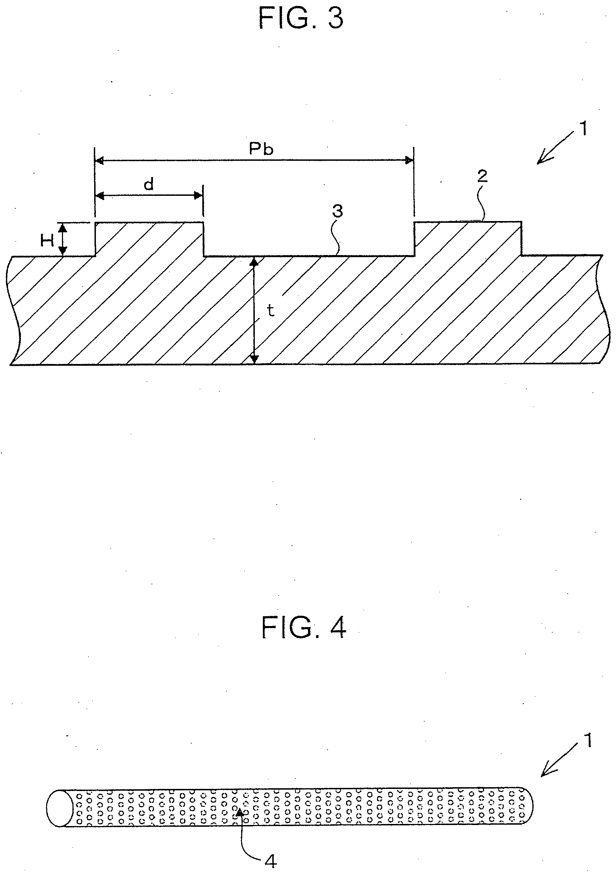

FIG. 1 is a diagram schematically depicting the welded titanium tube 1 according to this embodiment. FIG. 2 is an enlarged view of a concavo-convex pattern provided in an outer peripheral surface of the welded titanium tube 1, i.e., an enlarged diagram of the portion II in FIG. 1. FIG. 3 is an enlarged sectional view of the concavo-convex pattern provided in the surface of the welded titanium tube 1, i.e., a sectional view of the portion shown in FIG. 2.

The concavo-convex pattern has a plurality of protrusions 2 and a base surface 3 lying between the protrusions 2. The plurality of protrusions 2 are spaced in at least one of an axial direction and a circumferential direction of the welded titanium tube 1. Each of the protrusions 2 protrudes beyond the base surface 3 in a radial direction of the welded titanium tube 1. The welded titanium tube 1 can be manufactured by use of a flat plate made of titanium, namely, a titanium plate, which has a longitudinal direction and a width direction orthogonal to the longitudinal direction and includes a front surface and a back surface, wherein the concavo-convex pattern is provided in the front surface. Specifically, the welded titanium tube 1 is formed by: forming the titanium plate into a tubular shape by applying a curvature along the width direction to the titanium plate so as to butt widthwise opposite edges thereof against each other; and joining the widthwise opposite and mutually butted edges of the tubular-shaped titanium plate with each other by welding.

The concavo-convex pattern may be provided in an inner peripheral surface of the welded titanium tube 1, or may be formed in both of the outer peripheral surface and the inner peripheral surface. The welded titanium tube 1 thus formed with the concavo-convex pattern is usable, for example, as a heat transfer tube for a heat exchanger, such as a seawater desalination apparatus or an LNG (Liquefied Natural Gas) vaporizer.

In the case of use of the welded titanium tube 1 as a heat exchanger of a vaporizer, an eddy current flaw detection test (e.g., JIS G0583: 2012) is performed for an inspection as to whether the welded titanium tube 1 fulfills a criterion, as an end product for the heat exchanger (the presence or absence of surface defects).

The above titanium plate is a long flat plate, i.e., a band plate, having a longitudinal direction and a width direction orthogonal to the longitudinal direction, as mentioned above, wherein the concavo-convex pattern is provided in at least one of the front surface and the back surface of the titanium plate. The concavo-convex pattern is provided so as to space the plurality of protrusions 2 in at least one of the longitudinal direction and the width direction of the titanium plate.

FIG. 2 is a diagram enlargedly depicting the concavo-convex pattern, when viewing one surface of the titanium plate in a direction perpendicular to the surface, i.e., an enlarged view of the portion II in FIG. 1. In FIG. 2, each of the protrusions 2 has a circular shape, and they are regularly arranged side-by-side. Each of the protrusions 2, thus, has a circular columnar shape.

The shape of each of the protrusions 2 is not particularly limited. The top surface of each of the protrusions 2 is preferably flat or approximately flat, while also being permitted to be an upwardly-convexed, curved or chevron shape having a height dimension which gradually increases toward a central region thereof. The base surface 3 preferably has a constant or approximate constant diameter, while being permitted to be partially concaved in a valley-like shape.

As mentioned above, a configuration of the concavo-convex pattern is not particularly limited. In the concavo-convex pattern shown in FIG. 1, the plurality of protrusions 2 are spaced in both of the axial direction and the circumferential direction; however, the concavo-convex pattern in the present invention encompasses: a pattern in which a plurality of protrusions are spaced only in the circumferential direction, that is, a pattern in which each of the protrusions is a line-shaped protrusion continuously extending over the entire axial length of the tube; and a pattern in which a plurality of protrusions are spaced only in the axial direction, that is, a pattern in which each of the protrusions is a ring-shaped protrusion continuously extending over the entire circumference of the tube. In the case of a plurality of protrusions spaced in both of the axial direction and the circumferential direction, examples of a preferred shape of each of the protrusions include a circular columnar shape, an elliptic columnar shape, a cubic shape, and a rectangular parallelepiped shape.

In the embodiment shown in FIG. 2, the plurality of protrusions 2 are arranged in a zigzag pattern. Each of the columnar-shaped protrusions 2 has a diameter d of 300 µm.

The term "zigzag arrangement" means that respective centers of adjacent two of the protrusions 2 with respect to at least one of the axial direction and the circumferential direction fails to be aligned in either the axial direction or the circumferential direction. Specifically, in the embodiment shown in FIGS. 1 to 3, a pair of the plurality of protrusions 2 adjacent to each other in the circumferential direction (in an up-down direction in FIG. 2) are offset from each other in the axial direction (in a right-left direction in FIG. 2) orthogonal to the circumferential direction by about a half pitch, and the plurality of protrusions 2 are arranged so as to make an angle θ defined between a straight line Lb through respective centers of the protrusions 2 adjacent in the axial direction (in the right-left direction in FIG. 2) and a straight line Lc through respective centers of the protrusions 2 adjacent to the circumferential direction (in the up-down direction in FIG. 2) be 60°. The angle θ is not limited to 60°. The angle θ may be set to an arbitrary angle to an extent that an effect of improving heat-transfer performance can be obtained.

In the case of use of the welded titanium tube 1 as a heat transfer tube in a heat exchanger, the zigzag arrangement of the plurality of protrusions 2 allows some of the protrusions 2 to serve as a wall orthogonal to the flow of the operating fluid in any flow direction, under an uneven flow of an operating fluid in the heat exchanger, thereby contributing to improved heat-transfer performance by means of turbulence.

Furthermore, the inventor of this application diligently continued researches with a focus on a specific configuration of the concavo-convex pattern, particularly, respective dimensions of the protrusions 2 and a distance between adjacent ones of the protrusions 2, namely the pitch, for improving the heat-transfer performance (heat exchange efficiency) of thee welded titanium tube 1. This results in having found that setting specific parameters of the concavo-convex pattern as follows allows the heat-transfer performance of the welded titanium tube 1 to be improved.

### 1. Regarding Maximum Height H of Protrusion 2

The mean value Ha of respective maximum heights H of the protrusions 2 is set so as to satisfy the following relationship: 12 µm ≤ Ha ≤ 45 µm. The "maximum height H of each of the protrusions 2" is a maximum dimension of the protrusion 2 in a protruding direction with reference to a lowest spot of the base surface around the protrusion 2.

The reason is as follows. The mean value Ha of the maximum heights (mean maximum height Ha) less than 12 µm cannot allow high heat-transfer performance to be obtained. On contrary, the mean maximum height Ha greater than 45 µm causes the protrusions 2 to be detected as noise during an eddy current flaw detection test for detecting surface defects, thus generating a possibility that the noise hides defects remaining in the surfaces of the tube behind the noise to thereby prevent the defect from being detected.

### 2. Pitch P of Protrusions 2

A pitch P between adjacent ones of the protrusions 2 in a specific arrangement direction is set such that a ratio of a maximum value Pmax of the pitch to a mean value Pa of the pitch P is set so as to satisfy the following relationship: Pmax/Pa < 2. The "specific arrangement direction" is one direction of the axial and circumferential directions of the welded titanium tube 1 and the pitch of the plurality of protrusions 2 along the one direction is smaller than a pitch of the plurality of protrusions 2 along the other direction of the axial and circumferential directions. In the embodiment shown in FIG. 2, the specific arrangement direction is an axial direction because the pitch Pb of the protrusions 2 in the axial direction is smaller than the pitch Pc of the protrusions 2 in the circumstantial direction. In the case where the plurality of protrusions are spaced only in one direction of the axial direction and the circumstantial direction, the specific arrangement direction is the one direction.

The reason for the above setting of the pitch P is as follows. If the ratio Pmax/Pa is 2 or more, irregularity in arrangement of the protrusions 2 in the specific arrangement direction is greater than that in the case where the ratio Pmax/Pa is close to 1, that is, in the case of great uniformity of the pitch, increase the possibility that the protrusions 2 is detected as noise during the eddy current flaw detection test to thereby hide defects remaining in the surfaces of the tube behind the noise and thus prevent the defects from being detected.

### 3. Other Parameters

A ratio of a mean value da of respective maximum dimensions d of the protrusions 2 in the specific arrangement direction to the mean value Pa of the pitch is set so as to satisfy the following relationship: d/Pa ≤ 0.90. Besides, a ratio of the mean value Ha of the respective maximum heights H of the protrusion 2 to a wall thickness t of the welded titanium tube 1 at a lowest spot in the base surface 3 is set so as to satisfy the following relationship: Ha/t ≤ 0.11.

The reason is as follows. In the case of the ratio da/Pa greater than 0.90 or in the case of the ratio Ha/t greater than 0.11, the change in a volume of the surface portion of the welded titanium tube 1 according to the concavo-convex pattern is great, increasing the possibility that the protrusions 2 is detected as noise during the eddy current flaw detection test to thereby hide allow defects remaining in the surfaces of the tube behind the noise and thus prevent the defects from being detected.

The determinations of the dimensions in the concavo-convex pattern, including the mean maximum height Ha of the protrusions and the pitch P of the protrusions 2, improve the heat-transfer performance of the welded titanium tube 1 and enables surface defects remaining in the surfaces of the tube to be detected more accurately. In other words, the determinations allow the protrusions 2 to be effectively restrained from being detected as noise during the eddy current flaw detection test.

### [Example of Experiment]

Next will be described in detail the superiority of the dimensions of the protrusions 2 and the concavo-convex pattern including the protrusions 2 in the aforementioned welded titanium tube 1, based on experiments conducted to verify the superiority and results of the experiments.

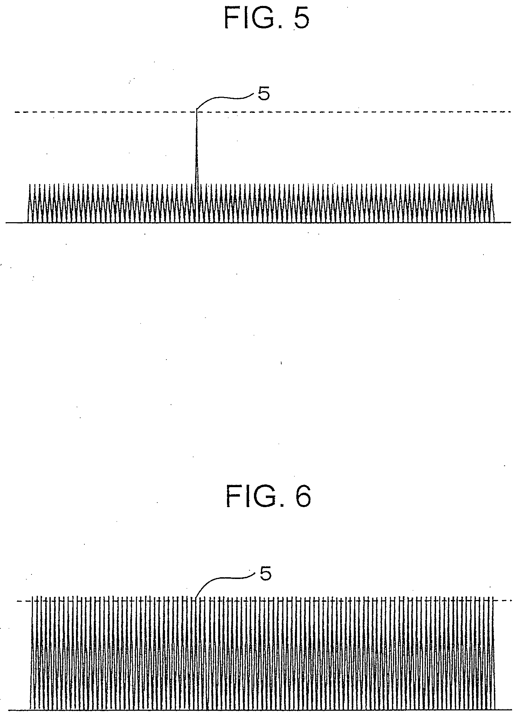

An eddy current flaw detection test for detecting surface defects 4 is performed on a welded titanium tube 1 having a surface with the surface defects (flaws) 4 as shown in FIG. 4. The results thereof are presented in Table 1. Table 1 shows the mean maximum height Ha of the protrusions and the ratio Pmax/Pa, and the results about detectability of flaws by the eddy current flaw detection test, in each of Inventive Examples 1 to 4 and Comparative Examples 1 to 5. Table 2 presents the result of evaporative-heat-transfer-performance test conducted on each welded titanium tube 1 in Inventive Examples 1 to 4 and Comparative Example 4. Furthermore, FIG. 5 depicts inspection data obtained by the eddy current flaw detection test on each of the welded titanium tubes 1 in Inventive Examples 1 to 4 to, and FIG. 6 depicts inspection data obtained by the eddy current flaw detection test on each of the welded titanium tubes in Comparative Examples 2 to 5.

**TABLE 1**

| | Mean maximum height Ha of protrusions (µm) | Pmax/Pa | Detectability of flaws |
|---|---|---|---|
| Inventive Example 1 | 12.8 | 1.22 | ○ |
| Inventive Example 2 | 16.1 | 1.17 | ○ |
| Inventive Example 3 | 18.0 | 1.24 | ○ |
| Inventive Example 4 | 23.4 | 1.52 | ○ |
| Comparative Example I | 11.0 | 1.20 | ○ |
| Comparative Example 2 | 12.2 | 2.02 | × |
| Comparative Example 3 | 45.5 | 1.33 | × |
| Comparative Example 4 | 38.6 | 1.33 | × |
| Comparative Example 5 | 25.0 | 1.90 | × |

**TABLE 2**

| | Evaporative heat-transfer performance |
|---|---|
| Inventive Example 1 | 1.07 |
| Inventive Example 2 | 1.10 |
| Inventive Example 3 | 1.12 |
| Inventive Example 4 | 1.22 |
| Comparative Example 1 | 1.04 |

Specifically, the present inventors have prepared a plurality of types of welded titanium tubes 1 different from each other in dimensions of each protrusion 2, as the Inventive Examples 1 to 4 and Comparative Examples 1 to 5, for optimizing dimensions such as the mean maximum height Ha of the protrusions 2 and the pitch P of the protrusions 2, and have checked whether or not defects generated in a surface of each of the welded titanium tubes 1 can be detected by the eddy current flaw detection test. More specifically, have been prepared a plurality of types of welded titanium tubes each usable as a heat transfer tube of a heat exchanger, namely, nine types of welded titanium tubes 1 different from each other in the mean maximum height Ha of the protrusions and the ratio of the maximum value Pmax of the pitch of the protrusions 2 to the mean value Pa of the pitch of the protrusions 2 in the specific arrangement direction, as presented in Table 1. Each test and measurement are performed on the welded titanium tubes 1. A specific procedure thereof is as follows.

### 1. Preparation of Titanium Band Plates

A concavo-convex pattern is provided in one surface of each of nine titanium plates (JIS Type 2) having a wall thickness t of 0.6 mm and a width W of 59.3 mm to thereby prepare nine types of titanium band plates. The titanium plates are common in that a diameter ϕ is 400 µm, whereas they are different from each other in terms of the mean maximum height Ha and the pitch P of the protrusions 2 in the concavo-convex pattern. In each of the titanium plates, the protrusions 2 are arranged like a polka-dotted pattern in top plan view.

### 2. Preparation of Welded Titanium Tubes 1

Then, each of the titanium band plates is formed into a tubular shape by use of a tube forming roll, so as to make the surface provided with the concavo-convex pattern including the protrusions 2 be an outer peripheral surface of the tubular-shaped plate. The widthwise opposite edges of the band plate are butted against each other and joined together by welding. Thus prepared is a welded titanium tubes 1 each having a diameter D of 19 mm, and a wall thickness t of 0.6 mm, and an overall length Lo of 10000 mm.

### 3. Measurement of each Parameter and Eddy Current Flaw Detection Test

The mean value Ha of respective maximum heights (mean maximum height Ha) of the protrusions in each of the nine welded titanium tubes 1 prepared in the above manner, namely, the welded titanium tubes 1 in Inventive Examples 1 to 4 and Comparative Examples 1 to 5, is measured by use of a laser microscope. Based on a profile determined by a laser microscope, a ratio (Pmax/Pa) is measured, the ratio being a ratio of a maximum value Pmax of a pitch (distance) P between adjacent ones of the protrusions 2 in the specific arrangement direction (axial or circumferential direction) of the welded titanium tube 1 to a mean value Pa of the pitch P.

Besides, the welded titanium tube 1 is provided with an artificial flaw (defect) by opening a through-hole having a diameter ϕ of 0.8 mm in each of the welded titanium tubes 1 by means of electric discharge machining. Subsequently, the welded titanium tubes 1 provided with the artificial flaw imparted in the surface thereof is subjected to the eddy current flaw detection test to check detectability of the surface flaw. The above Table 1 presents results of the measurement and checking.

According to Table 1, the welded titanium tube 1 in Inventive Example 1 has a mean maximum height Ha of the protrusion of 12.8 µm and a ratio Pmax/Pa of 1.22, wherein the flaw provided in the surface thereof has been detected by the eddy current flaw detection test. Therefore, the protrusions 2 of the welded titanium tube 1 in Inventive Example 1 have not been detected as noise in the eddy current flaw detection test.

The welded titanium tube 1 in Inventive Example 2 has a mean maximum height Ha of the protrusion of 16.1 µm, and a ratio Pmax/Pa of 1.17, wherein the flaw provided in the surface thereof has been detected by the eddy current flaw detection test. Therefore, also the protrusions 2 of the welded titanium tube 1 in Inventive Example 2 have not been detected as noise in the eddy current flaw detection test.

The welded titanium tube 1 in Inventive Example 3 has a mean maximum height Ha of the protrusion of 18.0 µm and a ratio Pmax/Pa of 1.24, wherein the flaw provided in the surface thereof has been detected by the eddy current flaw detection test. Therefore, also the protrusions 2 of the welded titanium tube 1 in Inventive Example 3 have not been detected as noise in the eddy current flaw detection test.

The welded titanium tube 1 in Inventive Example 4 has a mean maximum height Ha of the protrusion of 23.4 µm and a ratio Pmax/Pa of 1.52, wherein the flaw provided in the surface thereof has been detected by the eddy current flaw detection test. Therefore, also the protrusions 2 of the welded titanium tube 1 in Inventive Example 4 have not been detected as noise in the eddy current flaw detection test.

The welded titanium tube in Comparative Example 1 has a mean maximum height Ha of the protrusion of 11.0 µm and a ratio Pmax/Pa of 1.20, wherein the flaw provided in the surface thereof has been detected by the eddy current flaw detection test.

The welded titanium tube in Comparative Example 2 has a mean maximum height Ha of the protrusion of 12.2 µm and a ratio Pmax/Pa of 2.02, wherein the flaw provided in the surface thereof has not been detected by the eddy current flaw detection test. Also in each of the welded titanium tubes in Comparative Examples 3 to 5, the flaw provided in each surface thereof has not been detected by the eddy current flaw detection test, as with the welded titanium tube in Comparative Example 2.

As shown in FIG. 5, in the concavo-convex pattern of each of the welded titanium tubes 1 in Inventive Examples 1 to 4 and the welded titanium tube in Comparative Example 1, the recesses 3 and protrusions 2 formed on the surface of the welded titanium tube, although exhibiting a certain level of peak value in the eddy current flaw detection test, have not been detected as noise because the level thereof was one-half or less of the level of a peak value 5 exhibited by the artificial flaw provided in the surface of the welded titanium tube.

In contrast, in a concavo-convex pattern of each of the welded titanium tubes in Comparative Examples 2 to 5, recesses and protrusions formed on the surface of the welded titanium tube exhibit, as shown in FIG. 6, a high level of peak values in the eddy current flaw detection test, as with the level of the peak value 5 exhibited by the artificial flaw provided in the surface of the welded titanium tube. Therefore, the concavo-convex pattern in each of Comparative Examples 2 to 5 is detected as noise in the eddy current flaw detection test to thereby hide the peak value exhibited by the artificial flaw provided in the surface, hindering the artificial flaw from being detected by the eddy current flaw detection test.

The welded titanium tubes 1 in Inventive Examples 1 to 4 and the welded titanium tube in Comparative Example 1 allowing the artificial flaws to be successfully detected are further subjected to an evaporative heat-transfer performance test, through which the rate of improvement in heat-transfer performance as compared to a welded titanium tube having a smooth surface (hereinafter referred to as "smooth tube") was determined. Specifically, each of the welded titanium tubes 1 in Inventive Examples 1 to 4 and the welded titanium tube in Comparative Example 1 as test samples is set in a medium (Freon R134a) and warm water at about 35°C is supplied into the welded titanium tube at a constant flow rate (e.g., 25 L/min). Under this condition, measured are a change in temperature of the medium (Freon R134a), a change in temperature in an inside of each of the welded titanium tubes 1 in Inventive Examples 1 to 4, a change in temperature of the warm water supplied into the welded titanium tube in Comparative Example 1, a pressure of the warm water and a flow rate of the warm water.

Based on the result of the measurement, evaporative heat-transfer performance of each of the welded titanium tubes is calculated. Specifically, performed are calculation of an amount of exchanged heat between the warm water (about 35°C) and the medium (Freon R134a) based on the temperature and flow rate of each of the welded titanium tubes 1 in Inventive Examples 1 to 4 and the welded titanium tube in Comparative Example 1, calculation of a heat transfer coefficient α1 based on the calculated exchanged heat amount, and calculation of a heat transfer coefficient α2 of the smooth tube for comparison. Then, the ratio of the heat transfer coefficient α1 of each of the welded titanium tubes 1 in Inventive Examples 1 to 4 and the welded titanium tube in Comparative Example 1 to the heat transfer coefficient α2 of the smooth tube is calculated as a smooth-tube-reference heat-transfer performance improvement rate. The smooth-tube-reference heat-transfer performance improvement rate is, therefore, a relative value of the heat transfer coefficient α1 of each of the welded titanium tubes 1 in Inventive Examples 1 to 4 and the welded titanium tube in Comparative Example 1 to the heat transfer coefficient α2 of the smooth tube on the assumption that the heat transfer coefficient α2 is 1.00.

In consideration with heat-transfer performance of a welded titanium tube 1 having a concavo-convex surface as compared to the smooth tube, the smooth-tube-reference heat-transfer performance improvement rate of the welded titanium tube 1 for use with plates for a heat exchanger needs to be greater than 1.00 as the heat transfer coefficient α2 of the smooth tube; the present inventor further have found that the smooth-tube-based heat-transfer performance improvement rate is preferably 1.05 or more in order to obtain significantly improved heat exchange efficiency in the heat exchanger.

Table 2 shows that each of the welded titanium tubes 1 in Inventive Examples 1 to 4 has a smooth-tube-reference heat-transfer performance improvement rate of 1.07 or more, thus having sufficient heat-transfer performance (heat exchange efficiency).

Next will be described, with additional reference to the following Table 3, parameters concerning pitch and height of protrusions formed on each of the welded titanium tubes used in the above experiment on evaporative heat-transfer performance.

**TABLE 3**

| | Width of band plate | Tube wall thickness t | Tube diameter D | Mean maximum height Ha of protrusions | Maximum value Pmax of pitch of protrusions | Mean value Pa of pitch of protrusions | Mean value daof maximum dimensions of protrusions | Pmax/Pa <2 | da/Pa ≤0.90 | Ha/t ≤0.11 |
|---|---|---|---|---|---|---|---|---|---|---|
| | mm | mm | mm | µm | µm | µm | µm | | | |
| Invevtive Example 1 | 59.3 | 0.6 | 19.0 | 12.8 | 730 | 600 | 300 | 1.22 | 0.50 | 0.0213 |
| Invevtive Example 2 | 59.3 | 0.6 | 19.0 | 16.1 | 700 | 600 | 400 | 1.17 | 0.67 | 0.0268 |
| Invevtive Example 3 | 59.3 | 0.6 | 19.0 | 18.0 | 745 | 600 | 400 | 1.24 | 0.67 | 0.03 |
| Invevtive Example 4 | 80.1 | 0.6 | 25.4 | 23.4 | 910 | 600 | 500 | 1.52 | 0.83 | 0.039 |
| Comparative Example 1 | 59.3 | 0.6 | 19.0 | 11.0 | 730 | 600 | 400 | 1.20 | 0.67 | 0.0183 |
| Comparative Example 2 | 59.3 | 1.3 | 19.0 | 12.2 | 1250 | 620 | 430 | 2.02 | 0.69 | 0.0093 |
| Comparative Example 3 | 59.3 | 0.6 | 19.0 | 45.5 | 800 | 600 | 400 | 1.33 | 0.67 | 0.0758 |
| Comparative Example 4 | 59.3 | 0.3 | 19.0 | 38.6 | 800 | 600 | 400 | 1.33 | 0.67 | 0.1286 |
| Comparative Example 5 | 40.5 | 0.6 | 13.0 | 25.0 | 760 | 400 | 380 | 1.90 | 0.95 | 0.0416 |

As presented in Table 3, in the welded titanium tube 1 in Inventive Example 1, the ratio Pmax/Pa of the maximum value Pmax of the pitch of the protrusions 2 to the mean value Pa of the pitch of the protrusions 2 is 1.22, the ratio da/Pa of the mean value da of respective dimensions d of the protrusions 2 in the specific arrangement direction to the mean value Pa of the pitch P of protrusions 2 is 0.5, and the ratio Ha/t of the mean value Ha of the respective maximum heights H of the protrusion 2 to the wall thickness t is 0.0213.

As to the welded titanium tube 1 in Inventive Example 2, Pmax/Pa = 1.17, da/Pa = 0.67, and Ha/t = 0.0268. As to the welded titanium tube 1 in Inventive Example 3, Pmax/Pa = 1.24, da/Pa = 0.67, and Ha/t = 0.03. As to the welded titanium tube 1 in Inventive Example 4, Pmax/Pa = 1.52, da/Pa = 0.83, and Ha/t = 0.039.

The above measurement results show that key points are as follows: the ratio of the mean value da of respective dimensions d of the protrusions 2 in the specific arrangement direction of the welded titanium tube 1 to the mean value Pa of the pitch P between adjacent ones of protrusions 2 in the specific arrangement direction is 0.9 or less; the ratio of the mean value Ha of the respective maximum heights H of the protrusion 2 to the wall thickness t of the welded titanium tube 1 is 0.11 or less; and the ratio of the maximum value Pmax of the pitch P to the mean value Pa of the pitch P is less than 2.

The welded titanium tube in Comparative Example 1, although satisfying the conditions for the above ratios, has a mean value Ha of the respective maximum heights H of the protrusions of 11.0 µm less than 12µm, thus having poor heat-transfer performance and being unusable for heat exchange.

Thus, each of the above welded titanium tubes 1 in Inventive Examples 1 has an effectively increased surface area which allows heat exchange efficiency to be improved and a fine concavo-convex pattern which acts as boiling nuclei to allow evaporative heat-transfer efficiency to be improved, while preventing the provided concavo-convex pattern from being detected as noise in the eddy current flaw detection test to thereby allow defects causing fatigue breaking or the like, such as microscopic flaws, to be detected with a high degree of accuracy.

The aforementioned welded titanium tube 1 can be manufactured by a manufacturing method including the following steps. This production method includes: a concavo-convex pattern provision step of providing a concavo-convex pattern to one of a front surface and a back surface of a titanium plate; a formation step of forming the titanium plate provided with the concavo-convex pattern thereon into a tubular shape, for example, using a tube forming roll; and a welding step of joining widthwise opposite and mutually butted edges of the tubular-shaped titanium plate to each other by welding.

In the concavo-convex pattern provision step, one of the surfaces of the titanium plate is provided with the concavo-convex pattern, which includes a base surface 3 and a plurality of protrusions 2 each protruding beyond the base surface 3 in a radial direction of the welded titanium tube. The mean value Ha of respective maximum heights H of the protrusions 2 is set so as to satisfy the following relationship: 12 µm ≤ Ha ≤ 45 µm, and the ratio of the maximum value Pmax of the pitch P of the protrusions 2 in the specific arrangement direction to the mean value Pa of the pitch P is set so as to be less than 2 (Pmax/Pa < 2). Furthermore, the ratio of the mean value da of respective dimensions d of the protrusions in the specific arrangement direction to the mean value Pa of the pitch P is set so as to satisfy the following relationship: da/Pa ≤ 0.90, and the ratio of the average Ha of the respective maximum heights H of the protrusion 2 to the wall thickness t of the welded titanium tube is set so as to satisfy the following relationship: Ha/t ≤ 0.11.

The titanium plate provided with the above concavo-convex pattern is moved, in the provision step, to pass between a pair of tube forming rolls, in a posture where the surface provided with the concavo-convex pattern faces the pair of tube forming rolls, thereby being formed into the tubular shape. The dimensions of the concavo-convex pattern are set so as to prevent the concavo-convex pattern provided in the surface of the titanium plate from being crushed, that is, worn out, due to friction with the tube forming rolls. The concavo-convex pattern thus provides an outer peripheral surface of the welded titanium tube 1 with a sufficient surface area when the titanium plate is formed into a welded titanium tube 1, allowing the welded titanium tube 1 to have high heat exchange efficiency.

The widthwise opposite edges of the thus tubular-shaped titanium plate are joined to each other, in the welding step, by seam welding such as a TIG (Tungsten inert GAS) welding process. The welded titanium tube 1 is thereby completed.

As above, provided are a welded titanium tube having high heat-transfer performance and capable of allowing surface defects remaining in a surface thereof to be detected with a high degree of accuracy and a method for manufacturing the welded titanium tube.

Provided is a welded titanium tube, which is formed of a titanium plate in a tubular shape wherein opposite edges of the plate are butt-welded. The welded titanium tube includes an outer peripheral surface and an inner peripheral surface, at least one of the outer peripheral surface and the inner peripheral surface being provided with a concavo-convex pattern. The concavo-convex pattern has a base surface and a plurality of protrusions each protruding beyond the base surface radially of the welded titanium tube, the plurality of protrusions being spaced in at least one of an axial direction and a circumferential direction of the welded titanium tube. A mean value Ha of respective maximum heights of the protrusions is set so as to satisfy the following relationship: 12 µm ≤ Ha ≤ 45 µm. The "maximum height" is a maximum dimension of the protrusion in a protruding direction with reference to a lowest spot of the base surface around the protrusion.

In the welded titanium tube, a ratio of a maximum value Pmax of a pitch of the protrusions in a specific arrangement direction to a mean value Pa of the pitch of the protrusions is set so as to satisfy the following relationship: Pmax/Pa < 2, wherein the specific arrangement direction is one direction of the axial and circumferential directions of the welded titanium tube, the one direction being a direction in which the plurality of protrusions are spaced at a smaller pitch than a pitch at which the plurality of protrusions are spaced in the other direction of the axial and circumferential directions of the welded titanium tube. When the plurality of protrusions are spaced only in one direction of the axial direction and the circumstantial direction, the one direction corresponds to the specific arrangement direction.

Furthermore, a ratio of a mean value da of respective dimensions of the protrusions in the specific arrangement direction to the mean value Pa of the pitch is set so as to satisfy the following relationship: da/Pa ≤ 0.90, and a ratio of the mean value Ha of the respective heights of the protrusions to a wall thickness t of the welded titanium tube at a lowest spot of the base surface is set so as to satisfy the following relationship: Ha/t ≤ 0.11.

The mean value Ha of the respective maximum heights of the protrusions being set so as to be 12 µm or more allows the heat-transfer performance to be sufficiently improved. Besides, the mean value Ha being set to be 45 µm or less and the three ratios set within the respective ranges allows the concavo-convex pattern to be prevented from being detected in an eddy current flaw detection test as noise to hinder surface defects from being detected, thereby allowing the detection to be performed more accurately.

Also provided is a method for manufacturing the above welded titanium tube, including: a concavo-convex pattern provision step of providing at least one of a front surface and a back surface of a titanium plate having a longitudinal direction and a width direction orthogonal to the longitudinal direction with the concavo-convex pattern, so as to space the plurality of protrusions in at least one of the longitudinal and width directions; a formation step of forming the titanium plate into a tubular shape by applying a curvature along the width direction to the titanium plate provided with the concavo-convex pattern to butt opposite edges thereof in the width direction against each other; and a welding step of joining the widthwise opposite and mutually butted edges of the tubular-shaped titanium plate to each other by welding.

This production method enables a welded titanium tube capable of improving heat exchange efficiency and evaporative heat-transfer efficiency and capable of preventing the concavo-convex pattern from being detected as noise in the eddy current flaw detection test, in other words, capable of allowing defects such as microscopic flaws in a surface thereof to be detected.

It should be understood that the embodiment disclosed as above is an example of the present invention in every respect and is not meant to be construed in a limiting sense. In particular, as regards matters which are not explicitly disclosed in the above embodiment, such as operating and processing conditions, various parameters, and size, weight and volume of each component, any value easily assumable to a person having ordinary skill in the art may be employed without departing from a range usually implemented by a persons skilled in the art.

## Claims

1. A welded titanium tube formed of a titanium plate in a tubular shape, opposite edges of the plate being butt-welded, comprising an outer peripheral surface and an inner peripheral surface, at least one of the outer peripheral surface and the inner peripheral surface being provided with a concavo-convex pattern including a base surface and a plurality of protrusions each protruding beyond the base surface in a radial direction of the welded titanium tube, wherein:
the plurality of protrusions are spaced in at least one of an axial direction and a circumferential direction of the welded titanium tube;
a mean value Ha of respective maximum heights of the protrusions is set so as to satisfy the following relationship: 12 µm ≤ Ha ≤ 45 µm;
a ratio of a maximum value Pmax of a pitch of the protrusions in a specific arrangement direction to a mean value Pa of the pitch of the protrusions is set so as to satisfy the following relationship: Pmax/Pa < 2, the specific arrangement direction being one direction of the axial and circumferential directions of the welded titanium tube, the one direction being a direction in which the plurality of protrusions are spaced at a smaller pitch than a pitch at which the plurality of protrusions are spaced in the other direction of the axial and circumferential directions of the welded titanium tube;
a ratio of a mean value da of respective maximum dimensions of the protrusions in the specific arrangement direction to the mean value Pa of the pitch is set so as to satisfy the following relationship: da/Pa ≤ 0.90; and
a ratio of the mean value Ha of the respective maximum heights of the protrusions to a wall thickness t of the welded titanium tube at a lowest spot of the base surface is set so as to satisfy the following relationship: Ha/t ≤ 0.11.

2. A method for manufacturing the welded titanium tube as recited in claim 1, comprising:
a concavo-convex pattern provision step of providing a concavo-convex pattern to at least one of a front surface and a back surface of a titanium plate having a longitudinal direction and a width direction orthogonal to the longitudinal direction, so as to space the plurality of protrusions in at least one of the longitudinal and width directions;
a formation step of forming the titanium plate into a tubular shape by applying a curvature along the width direction to the titanium plate provided with the concavo-convex pattern to butt opposite edges thereof in the width direction against each other; and
a welding step of joining the widthwise opposite and mutually butted edges of the titanium plate to each other by welding.
